## Europäisches Patentamt
## European Patent Office
## Office européen des brevets

(19)

(11) Publication number: **0 181 436**
**B1**

(12)

# EUROPEAN PATENT SPECIFICATION

(45) Date of publication of patent specification: **14.06.89**

(51) Int. Cl.⁴: **G 11 B 17/00,** G 11 B 7/08, **G 11 B 19/28**

(21) Application number: **85109027.4**

(22) Date of filing: **27.06.79**

(84) Publication number of the earlier application in accordance with Art. 76 EPC: **0 007 199**

(54) Method and apparatus for information retrieval from an optically readable storage medium.

(30) Priority: **30.06.78 US 920777**

(43) Date of publication of application:
**21.05.86 Bulletin 86/21**

(45) Publication of the grant of the patent:
**14.06.89 Bulletin 89/24**

(84) Designated Contracting States:
**AT BE CH DE FR GB IT LU NL SE**

(56) References cited:
**DE-A-2 657 916**
**FR-A-2 349 191**
**GB-A-2 000 612**
**US-A-4 096 579**
**US-A-4 142 209**

(73) Proprietor: **DISCOVISION ASSOCIATES**
**2183 Fairview Road Suite 211**
**Costa Mesa California 92627 (US)**

(72) Inventor: **Dakin, Wayne Ray**
**7674 Sagewood Drive**
**Huntington Beach California 92648 (US)**
Inventor: **Ceshkovsky, Ludwig**
**10435 Morning Glory Avenue**
**Fountain Valley California 92708 (US)**

(74) Representative: **Needle, Jacqueline et al**
**W.H. BECK, GREENER & CO 7 Stone Buildings**
**Lincoln's Inn**
**London WC2A 3SZ (GB)**

Courier Press, Leamington Spa, England.

EP 0 181 436 B1

## Description

Background of the invention

Videodisc players and the like are known for recovering information that has been stored, for instance, as a succession of light reflective and non-reflective regions along spirally-formed information tracks in a disc-shaped record carrier. The record carrier can be rotated at a relatively high rate, while an optical system is employed for directing a radiant beam, such as a laser beam, to impinge upon the information tracks and for gathering a reflected beam that has been modulated by the reflective and non-reflective regions of the information track. Such a player includes a carriage for translating the videodisc relative to the radiant beam at a rate equal to the pitch of the spirally-recorded tracks and beam steering means for manipulating the radiant beam to precisely follow the path defined by such tracks.

A frequency modulated electrical signal is recovered from the reflected, light modulated beam and is applied to appropriate signal processing circuitry for deriving a video signal for display on a video monitor. Various control signals that are utilized to operate the player are also derived from the reflected beam.

Heretofore, the capability has existed of displaying a selected frame of video information by prescribing the address of the frame or information track wherein it is stored, and causing the carriage to translate in a rapid manner to the vicinity of such information track. The address information has been specially encoded in both of the vertical blanking intervals present in each revolution of an information track comprising the two standard fields of a video frame.

In German Patent Specification No. 2657916 (Telediffusion) disclosing an apparatus according to the first part of claim 1 such stored addresses identifying the information tracks or frames are used at the beginning of a search mode to identify the track which is being read at the beginning of the search mode. There is then the use of a signal derived from the speed of a motor for driving the carriage across the tracks towards a target track for determining the position of the reader in relation to the disc during the search movement.

In Thomson-Brandt French Specification No. 2349191 the address of a starting track is detected and the difference between that address and the address of a target track is computed, and then in the search mode pulses are counted corresponding to the crossing of successive tracks to position the reader in relation to the target track.

Problems encountered with that sort of search mode has arisen because the carriage tended to travel past the selected track so that the carriage drive had to be reversed to return to it, and it was then frequently necessary to arrange always to approach the target track from one direction when preparing to stop the carriage at that track. Also there is difficulty in monitoring the search mode by counting track crossings as the reader moves in relation to the disc because it is difficult to manufacture discs reliably without eccentrities and particularly at low carriage drive speeds, the eccentrities tend to create false track crossing signals even if the carriage is radially stationary if the usual means for centering the reader on the track in a play mode is disabled. The false track crossings tend not to be significant at high rates of carriage translation, but the method of monitoring by counting track crossings is unreliable at lower speeds of carriage translation.

Burroughs' U.S. Specification No. 4027338 discloses a search mode in which the crossing of each set of eight tracks can be detected by picking up the least significant digits of the address of one track in that group, which address is then used for counting the crossing of groups of tracks. It is to be noted that Burroughs does not disclose the idea of picking up and identifying address during the search mode which could be used independently of any counting of crossings.

The method and apparatus for information retrieval of the present invention satisfies a need for rapid and reliable information retrieval from optically readable tracks by information recovery systems utilizing radiant beam information recovery means.

An apparatus and a method according to the invention are set out in claims 1 and 2. Reference is made to EP—B—7199 based on the earlier parent Application No. 79301241. This patent is limited to storage discs.

The above and other objects and advantages of this invention will be apparent from the following more detailed description when taken in conjunction with the accompanying drawings of illustrative embodiments.

Description of the drawings

In the accompanying drawings:

Figure 1 is a generalized block diagram of a videodisc player in which some of the basic concepts of the present invention are illustrated;

Figure 2 is a flow chart illustrating an algorithm applicable to the carriage controller shown in Figure 1, for varying the carriage speed and direction of movement in the search mode;

Figure 3 is a waveform showing the response of the carriage motor as it is driven to a target track in either the forward or the reverse direction;

Figure 4 is an electrical schematic of one embodiment of a carriage driver as shown in Figure 1 suitable for utilizing the results of the algorithm of Figure 2;

Figure 5 is a generalized diagram of a signal recovery subsystem, suitable for use with the videodisc player of Figure 1; and

Figure 6a is a fragmentary cross-sectional view of three information tracks of a videodisc, while Figure 6b is a waveform applicable to the signal recovery subsystem of Figure 5.

Detailed description of the preferred embodiment

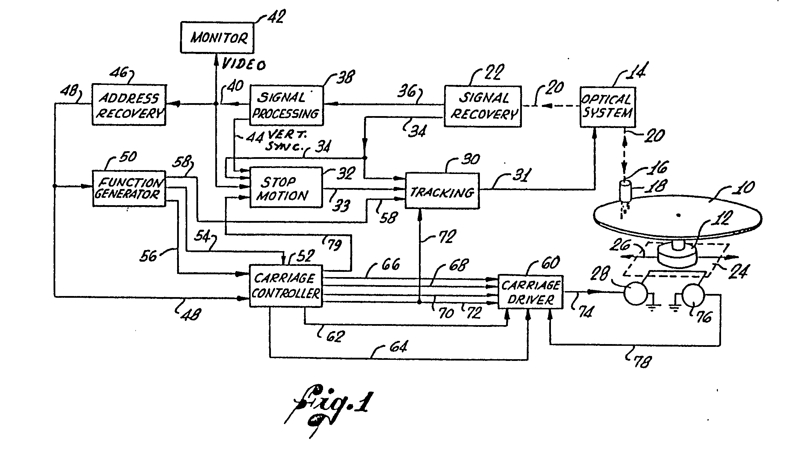

Referring now to Figure 1 of the drawings for purposes of illustration, there is shown a new and improved system for information retrieval embodying features of the present invention. In the drawings, the same numeral will be used in the several views to represent the same element.

In Figure 1, a generalized videodisc player is shown for purposes of illustrating the principles of the invention and includes a spindle on which a videodisc 10 is mounted for rotation by a spindle motor 12 at a preselected angular rate. Information is recorded on the videodisc 10 in a frequency modulated format as successive light reflective and non-reflective regions along tracks that are formed either as a continuous spiral or in discrete concentric rings. The videodisc player also includes an optical system 14 which produces a laser read beam 16 and directs it through an optical read head 18 having an objective lens for focusing the read beam to a precise spot on the videodisc 10.

A reflected beam 20, modulated by the information recorded in the tracks, is gathered by the read head 18 and returned through the optical system 14 to a signal recovery subsystem 22. The spindle motor 12 is mounted on a carriage 24 for translation of the videodisc 10 in the direction indicated by a double-headed arrow 26 by means of a carriage motor 28. Coarse steering of the read beam 16 along the information tracks is accomplished by translating the carriage 24 either at a uniform rate equal to the pitch of spirally-formed tracks or stepwise if the tracks are formed as discrete concentric rings.

A tracking subsystem 30 is included in the videodisc player to enable the read beam to follow eccentricities that are inherent in the information tracks with present technology. Also, since the description that follows will assume that the information tracks are formed in a spiral manner, wherein one complete revolution of the videodisc comprises one information track, a stop motion subsystem 32 is shown in Figure 1 to enable the videodisc player to stop or freeze on a particular track. Both the tracking and stop motion subsystems receive a control signal on line 34 from the signal recovery subsystem 22.

The tracking subsystem 30 is employed for maintaining radial tracking of the focussed read beam 16 on one information track, and is responsive to the control signal on line 34 to develop an error signal on line 31 to the optical system 14, indicating the offset from the preferred center-of-track position to the actual position. This tracking error signal is employed for controlling the movement of a radial tracking mirror in the optical system 14 to bring the light spot back onto the center-of-track position.

The tracking subsystem 30 normally operates in a closed loop mode of operation when the player is operating at a play speed. However, the tracking subsystem 30 is disabled in a retrieval mode, such that the differential tracking error is temporarily removed from controlling the operation of the radial tracking mirror. The tracking subsystem 30 can also be temporarily disabled by the stop motion subsystem 32, which then generates various combinations of signals on a line 33 to control the movement of the radial tracking mirror for directing the point of impingement of the focussed spot from the preferred center-of-track position on a first track to a center-of-track position on an adjacent track in order to effect stop motion.

The signal recovery subsystem 22 develops an FM signal that includes the video information and all other information stored in the information tracks, and applies that signal on a line 36 to a signal processing subsystem 38. The latter subsystem includes a conventional FM detector for demodulating the FM signal into a standard format video signal, which is then applied on a line 40 to a video monitor 42 for display and to the stop motion subsystem 32. Means are also included in the signal processing subsystem 38 for separating the vertical sync signal from the video signal so that the sync signal can be applied on a line 44 to the stop motion subsystem 32 to be used in a manner described below.

Each information track or frame of video information that is recorded on the videodisc 10 is identified by a unique address encoded once in each of the pair of vertical intervals between the two fields comprising a frme. For purposes of the present invention, the video signal from the signal processing subsystem 38 is also applied on a line 40 to an address recovery subsystem 46, wherein the address associated with each information track is decoded in any manner familiar to those of ordinary skill in the art. These addresses, for instance may be encoded in a selected digital format on a selected horizontal line in each vertical interval.

A signal representing the address information is then directed on a line 48 to a function generator 50 and to a carriage controller 52. The function generator 50, which may be embodied in a remote control, displays the address of the information track currently being read, and includes means for selecting both a retrieval mode of operation and the address of the information track targeted for retrieval, in accordance with the principles of the present invention.

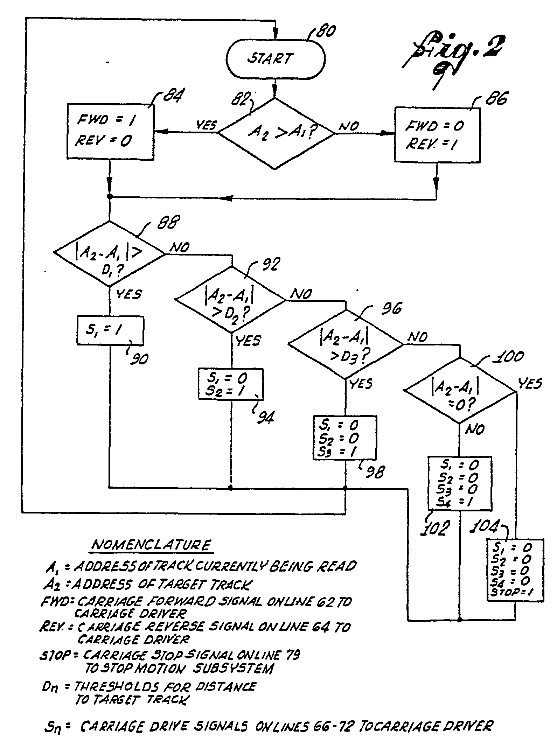

In essence, when the retrieval mode is selected, the function generator 50 applies both an enabling signal on a line 54 and the address of the target track on a line 56 to the carriage controller 52, wherein a comparison of the address of the current track being read with the address of the target track is made and a determination is reached whether the carriage 24 should be driven in a forward or reverse direction to retrieve the target track. Also, the carriage controller 52 prescribes a sequence of drive signals to be applied to a carriage driver 60 in order to move the carriage motor 28, and hence the carriage 24 and the videodisc 10, to retrieve the target track in a rapid manner without overshooting it. The algorithm by which these determinations are made is illustrated in Figure 2, and will be described in detail below. The function generator 50 also applies a signal on a line 58 to the tracking sybsystem 30 to disable it in the search mode as described above.

The determination of the direction in which the carriage 24 should be driven to reach the target track results in either a forward (FWD) signal being applied from the carriage controller 52 to carriage driver 60 over line 62 or a reverse signal (REV) being applied to the carriage driver on a line 64. In addition, the sequence of signals prescribed by the carriage controller 52, so that the carriage 24 rapidly homes in on the target track, results in one of four carriage drive signals (S1, S2, S3 or S4) being applied to the carriage driver 60 from the carriage controller on one of the lines 66, 68, 70 or 72, respectively. The output of the carriage driver 60 is directed over a line 74 to drive the carriage motor 28, and a tachometer 76 is shown as being mechanically interconnected to the carriage motor to provide an indication of its actual speed and direction by means of a feedback signal on a line 78 to the carriage driver.

The carriage drive signals S1—S4 represent four possible speeds at which the carriage motor 28 can be driven, and hence four rates at which the carriage 24 and the videodisc 10 can be translated relative to the read beam 16. One of these drive signals, S4, corresponds to the normal play speed of the videodisc player which results in translation of the carriage 24 at a rate equal to the recorded pitch of the information tracks. The other drive signals S3, S2 and S1 correspond to successively greater carriage translation rates.

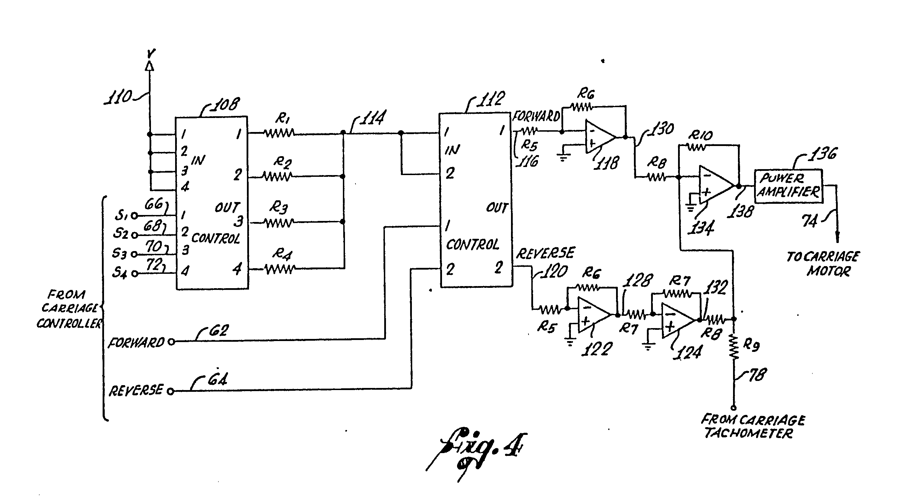

The carriage controller 52 prescribes a preferred sequence for applying the drive signals to the carriage motor 28, as a function of the distance between the track currently being read by the player and the track targeted for retrieval in the function generator 50, for retrieval of the information stored in the target track. In this regard, as the carriage moves and the distance to. the target track decreases, the drive signal from the carriage driver 60 on line 74 to the carriage motor 28 is sequentially stepped downward as a sequence of distance thresholds, D1, D2 and D3 are crossed. This results in a prescribed deceleration of the carriage motor 28 and hence the carriage 24, as the target track is approached (see Figure 3). When the target track is within a prescribed distance, represented by distance threshold D3, the tracking subsystem 30 is reenabled by a signal on line 72 from the carriage controller 52. Then, as the target track is reached, all drive signals to the carriage driver 60 are set to zero, and the stop motion subsystem 32 is enabled by a signal on line 79 from the carriage controller 52.

Referring now to Figure 2, the manner in which the carriage controller 52 determines the direction in which to drive the carriage 24 to retrieve the target track and prescribes an optimum sequence of drive signals is diagrammed. It will be apparent that, in addition to the possibility of implementing the algorithm by means of suitable hardware, such as digital logic elements, all or part of the algorithm may be performed by conventional programming on a digital computer or a microprocessor.

Initiation of a retrieval mode by the function generator 50 commences with a conventional start step 80, followed by a step 82 in which the question is asked whether the address A2 of the target track (target address) is greater than the address A1 of the track currently being read by the videodisc player (current address). An affirmative answer to this question indicates that the proper direction to drive the carriage 24 to retrieve the target track is forward and leads to step 84, resulting in the forward signal on line 62 being set to a true state (FWD=1), while the reverse signal on line 64 is set to a false signal (REV=0). If the answer is no, then the forward signal on line 62 and the reverse signal on line 64 are set to the false (FWD=0) and the true (REV=1) states, respectively, by step 86.

Once the direction that the carriage is to be driven has been fixed either by step 84 or by step 86, a sequence of steps are utilized to determine the distance D to be traversed to the target track, as represented by the absolute magnitude of the difference between the target address A2 and the current address A1.

More specifically, with reference to Figure 2, the question is asked at step 88 whether the distance D is greater than the first distance threshold D1 from the target track. If the answer is yes, then the drive signal S1 on line 66 is set to a true state (S1=1) in step 90, resulting in the carriage motor 28 being driven at a particular speed. Since the distance threshold D1 represents the greatest distance to the target track, the drive signal S1 is selected to cause the carriage motor 28 to operate at its fastest available speed until the next distance threshold D2 is reached. On the other hand, if the answer to the question posed in step 88 is no, then the carriage motor 28 will be driven at a prescribed speed less than the maximum in order that the carriage motor not be driven at such a rate that it could not be stopped without overshooting the target track. Initially, the answer to the question posed in step 88 may be no, of course, if the current track being read when the search mode commences is closer to the target track than the distance threshold D1.

As mentioned previously, eccentricities in the videodisc 10, which are unavoidable with present technology, require utilization of a tracking subsystem 30 such as that shown in Figure 1 to accomplish fine steering of the read beam to accurately following the path of the information tracks in a play mode of operation. It was also noted, however that in a retrieval mode of operation as described herein, the tracking subsystem 30 is disabled. Notwithstanding this disablement of the tracking subsystem 30, a certain amount of FM information is recovered from the videodisc 10 and provided to the signal recovery subsystem 22 as the read beam 16 rapidly crosses tracks in the search mode.

The invention is based on the discovery that, although the FM information recovered from the disc is such that the video monitor 42 cannot provide a stable display, sufficient information will be recovered at various intervals to derive the addresses of some tracks as they are crossed. In this regard, identical address information is diametrically encoded for each track, in the vertical interval associated with each field comprising a frame, so that there will be an opportunity to recover address information every half revolution of the disc. If the videodisc is rotating at a typical 1800 r.p.m., this will occur once approximately every 16 milliseconds. It is contemplated, therefore, that the algorithm of Figure 2 be repeated upon each updating of the current address A1, typically at intervals of 16 msec. Thus, after step 90, as well as all other steps wherein a drive signal is set, the algorithm returns to the start step 80 in anticipation of updated information respecting the current address A1.

When the answer to step 88 is no, either because the target track is initially closer to the current track being read than the distance threshold D1, or because the carriage 24 has been driven closer in the search mode at the maximum speed represented by the drive signal S1, the question is posed by step 92 whether the distance D is greater than the next distance threshold D2. If the answer is yes, then the drive signal S1 on line 66 is set to a false state (S1=0) and the drive signal S2 on line 68 is set to a true state (S2=1) by step 94. Consequently, the carriage motor 28 will be driven at a speed corresponding to the drive signal S2, and the carriage controller will remain in this state until the next distance threshold D3 is reached.

From the foregoing, it should now be apparent that a primary purpose of sequentially down stepping the drive signal applied to the carriage driver 60 is to decelerate the carriage motor 28 in a relatively predictable fashion and to intermittently redetermine the speed of the motor as the carriage approaches the target track. In this manner, the effects of variability in the dynamic characteristics of particular carriage motors and carriages is minimized by selecting the drive signals and distance thresholds to allow intermittent redetermination of carriage position and speed during the course of homing in on the target track. As a result, the carriage is driven towards the target as rapidly as practicable without overexciting the carriage motor and possibly experiencing overshoot.

To complete the algorithm, the question is posed at step 96 whether the distance D is greater than the third distance threshold D3 to the target track and, if the answer is yes, the preceding drive signals S1 and S2 are set to a false state (S1=0, S2=0), and the drive signal S3 that is applied on line 70 from the carriage controller 52 to the carriage driver 60 is set to a true state (S3=1) by step 98. When the distance D finally becomes less than the third distance threshold D3, but is still greater than zero, as determined by the next question posed in step 100, the fourth drive signal S4 is set to a true state (S4=1), and all previous drive signals S1, S2 and S3 are set to a false state (S1=0, S2=0, S3=0) by step 102.

It will be recalled that in the presently preferred embodiment, the carriage motor speed represented by the drive signal S4 is chosen to be the normal play speed of the videodisc player in which the carriage 24 is translated at a rate equal to the pitch of the spiral tracks formed on the videodisc 10. Therefore, the drive signal S4 is also applied on line 72 to the tracking subsystem 30 in order to reenable it upon reestablishing play speed, since the tracking subsystem 30 was disabled by a signal on line 58 from the function generator 50 upon initiation of the search mode. This was because the various sequential drive signals S1, S2 and S3 all cause the carriage 24 to translate at rates greater than the normal play speed represented by the drive signal S4. At these higher translation rates, it is neither practical nor desirable to attempt to fine steer the read beam 16 as tracks are rapidly crossed. Of course, when the drive signal S4 is applied, the tracking subsystem 30 preferably is reenabled so that the read beam 16 will most accurately follow the information tracks and track addresses can be reliably retrieved.

Finally, when the difference D becomes zero, making the answer to the question posed in step 100 yes, all previous drive signals S1, S2, S3 and S4 are set to a false state (S1=0, S2=0, S3=0 and S4=0) by step 104. Of course, with all the drive signals S1—S4 set to a false state, the carriage 24 will stop. At the same time, a stop signal on a line 79 to the stop motion subsystem 32 is set to a true state (STOP=1) by step 104. The purpose of this stop signal is to enable the stop motion subsystem 32 such that the target track will be frozen on the display of the video monitor 42. Since the information tracks are recorded in spiral fashion, it is required that read beam 16 be jumped back once each revolution of the videodisc 10 so that the read beam repeatedly retraces the same frame of video information. A particular manner of generating an appropriate jump-back signal and controlling the tracking subsystem employs the detection of a jump-back white flag inserted into each frame suitable for stop motion purposes.

Briefly, the stop motion subsystem 32 is employed as a means for generating a plurality of control signals for application to the tracking subsystem 30 on line 33 to achieve the movement of the focussed spot tracking the center of a first information track to a separate and spaced location in which the spot begins tracking the center of the next adjacent information track. The stop motion subsystem 32 performs its function by detecting a predetermined signal recovered from the frequency modulated video signal which indicates the proper position within the recovered frequency modulated video signal for initiating the jumping operation. This detection function is achieved, in part, by internally generating a gating circuit conditioned by the vertical sync signal received on line 44 to indicate that portion of the recovered video signal received on line 40, within which the predetermined signal should be located.

In response to the predetermined signal, which has been termed a "white flag" in the aforementioned related application, the stop motion subsystem 32 generates a first control signal for application to the tracking subsystem 30 for temporarily interrupting the application of the differential tracking error to the radial tracking mirrors in the optical system 14. The stop motion subsystem 32 generates a second control signal for application to the radial tracking mirrors for causing the radial tracking mirrors to leave the center of tracking position on a first information track and jump to an adjacent information track. The stop motion subsystem terminates the second control signal prior to the focussed spot reaching the center of focus position on the next adjacent information track.

A third control signal may be generated by the stop motion subsystem 32 at a time spaced from the termination of the second control pulse. The third control pulse is applied directly to the radial tracking mirrors for compensating for the effects on it which were added by the second control pulse. While the second control pulse is necessary to have the reading beam jump from a first information track to an adjacent information track, the spaces involved are so small that the jumping operation cannot always reliably be achieved using the second control signal alone. Therefore, the third control signal may be employed for compensating for the effects of the second control jump pulse on the radial tracking mirror at a point in time when it is assured that the focus spot has, in fact, left the first information track and has yet to be properly positioned in the center of the next adjacent information track. Finally, the differential error signal may be gated through to the radial tracking mirror at a time calculated for the gated portion of the differential tracking error to assist the compensation pulse in bringing the focussed spot under control upon the center-of-track position of the next adjacent information track.

Referring now specifically to Figure 3, control of the carriage motor drive signal, and hence carriage motor speed, as a function to the distance D to the target track, is illustrated by waveforms, including approaches from both the forward and the reverse directions.

Assuming for the moment that the carriage 24 is positioned further from the target track than the distance threshold D3 and should be driven in the forward direction to reach the target track, it can be seen that the maximum drive signal S1 is initially applied to the carriage driver 60 so that the carriage motor 28 will assume its maximum available speed. As the carriage 24 approaches the distance threshold D3, the drive signal applied to the carriage driver 60 steps down to S2. Of course, the carriage motor 28 and the carriage 24 have a certain amount of inertia and the speed decays to a speed dictated by the drive signal S2 over a period of time. Preferably, the dynamic characteristics of the carriage motor 28 and the carriage 24 are critically damped so that a speed represented by the drive signal S2 is reached as quickly as possible.

It should be noted that, in any event, the dynamic characteristics of the carriage motor 28 and carriage 24, as well as the distance thresholds such as D3 and D2, should be chosen so that the carriage motor speed does decay to the speed represented by the drive signal S2 prior to the carriage reaching the next distance threshold D2. Otherwise, the purpose of stepping down the drive signal to the carriage driver in order to redetermine the carriage motor speed at particular intervals along route to the target track will be defeated. Those skilled in the art will recognize that particular carriage motors and carriages will display a certain amount of variability in their dynamic response characteristics and that the various drive signals and distance thresholds should be selected with this variability in mind, i.e., sufficient distance between thresholds should be allowed so that even a carriage motor and assembly with a relatively slow time response will decelerate to the speed represented by the next drive signal prior to the next distance threshold being reached.

This process of stepping down the drive signal and allowing the speed of the carriage motor 28 to substantially completely decay before again stepping down the drive signal at the next distance threshold is repeated until the normal play speed represented by drive signal S4 is reached and the tracking subsystem 30 is reenabled. Then as the carriage 24 reaches the target track, the carriage 24 is stopped and the stop motion subsystem 32 is enabled as described above.

For purposes of convenience, the identical sequence of drive signals and distance thresholds is shown for implementation when the target track must be approached in the reverse direction. For particular systems, it may be that the carriage motor and the carriage will display differing response characteristics in the forward and the reverse directions, in which case a different sequence of drive signals and distance thresholds would be selected. It will also be appreciated that the particular number of drive signals and distance thresholds in the sequence is not critical to the present invention.

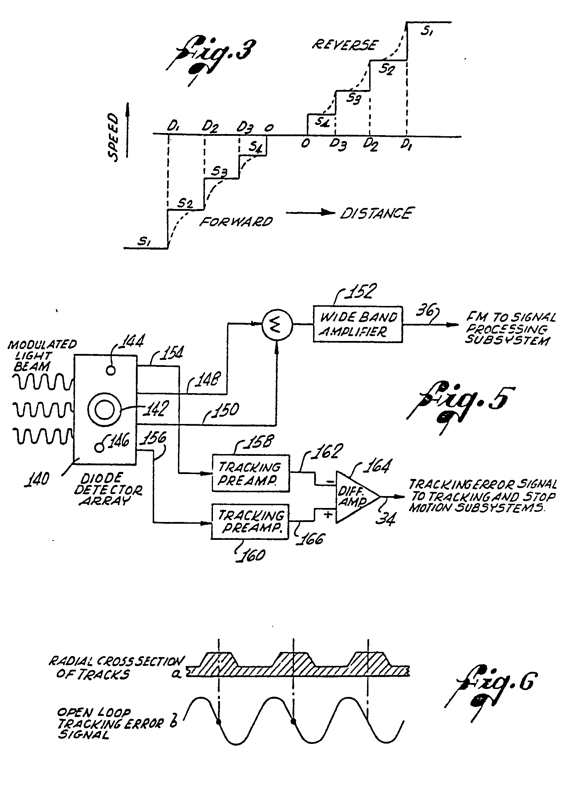

A particular electrical circuit for implementing the carriage driver is shown in Figure 4. The circuit includes a first quad analog switch 108 having four IN, OUT and CONTROL connections. The drive signals S1—S4 are applied individually to the four CONTROL connections on the lines 66, 68, 70 and 72, while the four IN connections are tied to a positive supply voltage V on a line 110. The four OUT connections are each connected individually through a resistor R1—R4, respectively, to the first two IN connections of a second quad analog switch 112 on a line 114. The second switch 112 receives its corresponding two CONTROL inputs individually from the forward and reverse signals on lines 62, 64 from the carriage controller 52. Only two connections are utilized on the second analog switch 112. A suitable commercial device for these two quad analog switches is a Motorola type MC14016.

The first OUT connection of the second analog switch 112 is applied through a resistor R5 on line 116 to the inverting input of a first operational amplifier 118 having a feedback resistor R6. The second OUT connection of the second analog switch 112 is likewise applied through an equivalent resistor R5 on line 120 to the inverting input of a second operation amplifier 122, having an identical feedback resistor R6. The output of the second operational amplifier 122 is then applied to the inverting input of a third operational amplifier 124 through a resistor R7 on a line 128, the operational amplifier having an identical feedback resistor R7 to provide unity gain.

The operation of this circuit as thus far described will now be explained. Depending on which, if any, of the drive signals S1—S4 is in a true state, the corresponding OUT connection of the first analog switch will have the supply voltage V applied to it. Thus, a current will be supplied through a particular resistor, such as resistor R1 when drive signal S1 is set to a true state (S1=1), to the two IN connections on the second analog switch 112 on line 114. This current will be directed through either one of the two OUT connections of the second switch 112 depending on which of its two control signals, the forward or reverse signals from the carriage controller 52, are in a true state. Hence, the current will cause an inverted voltage to appear at the output of the first operational amplifier 118 if the forward signal is true (FWD=1). On the other hand, a noninverted voltage will appear at the output of the third operational amplifier 124 if the reverse signal is true (REV=1).

One of these two voltages are then applied through identical resistors R8 on lines 130 or 132 for summing with the feedback signal from the carriage tachometer 76 through a resistor R9 on line 78, at the inverting input of a fourth operational amplifier 134, having a feedback resistor R10. The output of this fourth operational amplifier 134 is then applied to a power amplifier 136 on a line 138 for appropriately energizing the carriage motor 28 over a line 74 in the forward or the reverse direction. In accordance with well-known principles, the carriage tachometer 76 is intended to generate an equal and opposite signal to the drive signal from the first operational amplifier 118 or the third operational amplifier 124, as the case may be, to null the intput at the fourth operational amplifier 134, i.e., negative feedback control.

An alternative approach for determining carriage location or distance D from the target track can be described with reference to Figures 5 and 6.

A suitable subsystem for implementing the signal recovery subsystem shown in Figure 1, is disclosed in Figure 5. A diode detector array 140 includes a central photodetector 142 for deriving the informational content of the modulated light beam and has a pair of diametrically opposed tracking diodes 144, 146 on either side. An electrical signal proportional to the intensity of light received on the central detector 142 is provided on lines 148, 150 to a summing junction and then to a wide band amplifier 152, having an output directed on line 36 to the signal processing subsystem 38 as described above. Each tracking diode 144, 146 is disposed to detect the portion of the modulated light beam corresponding to individual tracking spots, which are produced by splitting the read beam 16 into three separate beams by means of a diffraction grating in the optical system 14, and each diode generates an electrical signal on lines 154 and 156, respectively, to tracking preamplifiers 158, 160. One preamplifier 158 has an output directed on a line 162 to the inverting input of an amplifier 164 and the output of the other preamplifier 160 is directed on a line 166 to the noninverting input of the amplifier. The output of the amplifier 164 then provides a tracking error signal on line 34 to the tracking subsystem 30 and to the stop motion subsystem 32 as described in connection with Figure 1.

A fragmentary radial cross section of three tracks of the videodisc are illustrated in Figure 6a; while in Figure 6b, the open loop differential tracking error signal is illustrated which appears on line 34 at the output of differential amplifier 164 when the tracking subsystem 30 is disabled and the carriage translates rapidly in a search mode of operation.

It will be apparent that the waveform of Figure 6b can be utilized as an indicator of track crossings and to provide a count of the number of tracks crossed in the search mode. Considering this information in combination with the target address A2 and the address of the particular track from which the search is initiated, a continuous monitoring of carriage position relative to the target track could be derived by counting track crossings. It should be noted, however, that such a technique would be preferable only at relatively high speeds of translation of the carriage. This is because the eccentricities inherent in a videodisc tend to create false "track crossings" even when the carriage is standing still, if the tracking subsystem is disabled. At high rates of translation of the carriage, the effects of these false "track crossings" due to eccentricities will not be significant, but as the speed of the carriage slows towards a play speed their effects may prevent an accurate track count. Hence, in an alternative embodiment, it is contemplated that track crossings may be counted by means of the open loop differential tracking error signal at relatively high rates of speed, while dependence will be shifted to detection of addresses as the carriage speed approaches play speed.

In a suitable case where search speed is not to high, track crossings need not be counted at all, but the detection of addresses during search can be used throughout.

The aforedescribed information retrieval system of the present invention satisfies a need for improved systems capable of rapidly accessing information tracks in apparatus for the type utilising a radiant beam to optically read the information stored in such tracks.

Although in the particular example described with reference to Figure 1, there is a turntable for rotating a video disc 10, the invention is equally applicable to a recording medium having straight parallel information tracks, rather like the lines on a page of printing. Movement between the reading beam and the medium would be transverse to the length of the tracks both at the end of a track during normal reading and during more rapid movement to a selected target track.

Prior proposals by the present Applicants are the subject of European Patent Publications EP—A—3178, EP—A—4476 and EP—A—5316.

## Claims

1. An apparatus for selectively retrieving recorded information from a plurality of optically readable information tracks formed in an information storage medium wherein the information includes addresses for identifying the tracks, said apparatus comprising: means (12) for rotating the storage medium (10); means (14) for impinging an incident beam of radiation (16) upon the storage medium (10) to be reflected therefrom as a beam (20) modulated in accordance with the information recorded in the information tracks; information recovery means (22) for recovering information from the modulated beam (20), including address detection means (46) for extracting addresses from the information recovered by said information recovery means (22); means (50) for selecting a target track from which information is to be retrieved in a search mode of operation, and for initiating said search mode of operation; means (24, 28) for moving said incident beam (16) across the storage medium (10) towards the selected target track; control means (52, 60) coupled to said moving means (24, 28) for decreasing the speed of movement of said incident beam (16) in accordance with the separation between said incident beam (16) and the selected target track and for ceasing movement of said incident beam when said separation is zero, to thereby conclude said search mode of operation; characterized by said control means (52) utilizing addresses extracted by said address detection means (46) during said search mode of operation to determine the separation between said incident beam (16) and the selected target track for the purpose of decreasing the speed of movement of said incident beam (16) in accordance with the determined separation between said incident beam (16) and the selected target track.

2. A method of selectively retrieving recorded information from a plurality of optically readable information tracks formed in an information storage medium, wherein the information includes addresses for identifying the tracks, said method comprising the steps of: rotating the storage medium; impinging an incident beam of radiation upon the storage medium to be reflected therefrom as a beam modulated in accordance with the information recorded in the information tracks; recovering information from the modulated beam; selecting a target track from which information is to be retrieved in a search mode of operation, and initiating said search mode of operation; moving said incident beam across the storage medium towards the selected target track; decreasing the speed of movement of said incident beam in accordance with the separation between said incident beam and the selected target track; ceasing movement of said incident beam when said separation is zero, to thereby conclude said search mode of operation; characterized by extracting addresses from the information recovered during said search mode of operation and utilizing said extracted addresses to determine the separation between said incident beam and the selected target track for the purpose of decreasing the speed of movement of said incident beam in accordance with the determined separation between said incident beam and the selected target track.

## Patentansprüche

1. Einrichtung zur Wiedergewinnung von aufgezeichneter Information von einer Vielzahl von optisch lesbaren Informationsspuren eines Informationsspeichermediums, wobei die Information Adressen zum Identifizieren der Spuren enthält; diese Einrichtung umfasst: Mittel (12) zum Drehen des Speichermediums (10), Mittel (14) zum Auftreffenlassen eines Strahlenbündels (16) auf das Speichermedium (10), damit von demselben ein in Abhängigkeit der in den Informationsspuren aufgezeichneten Information modulierter Strahl (20) reflektiert wird, Informationsrückgewinnungsmittel (22) zum Rückgewinnen der Information aus dem modulierten Strahl (20) mit Adressenfeststellmittel (46) zum Erhalten der Adressen aus der durch die genannten Informationsrückgewinnungsmittel (22) zum Rückgewinnen der Information aus dem modulierten Strahl (20) mit Adressenfeststellmittel (46) zum Erhalten der Adressen aus der durch die genannten Informationsrückgewinnungsmittel (22) zurückgewonnenen Information, Mittel (50) zum Auswählen einer Zielspur, aus welcher während eines Suchvorganges die Information zurückgewonnen werden soll, und zum Einleiten des genannten Suchvorganges, Mittel (24, 28) zum Bewegen des genannten Strahlenbündels (16) über das Speichermedium (10) zur ausgewählten Zielspur, und mit den genannten Bewegungsmittel (24, 28) gekuppelte Steuermittel (52, 60) zum Herabsetzen der Bewegungsgeschwindigkeit des genannten Strahlenbündels (16) in Abhängigkeit des Abstandes zwischen dem genannten Strahlenbündel (16) und der ausgewählten Zielspur und zum Stoppen der Bewegung des genannten Strahlenbündels, wenn der genannte Abstand null ist, um so den genannten Suchvorgang zu beenden, dadurch gekennzeichnet, dass die genannten Steuermittel (52) während dem genannten Suchvorgang die durch die genannten Adressenfeststellmittel (46) erhaltenen Adressen verwenden zum Bestimmen des genannten Abstandes zwischen dem genannten Strahlenbündel (16) und der ausgewählten Zielspur zwecks Herabsetzung der Bewegungsgeschwindigkeit des genannten Strahlenbündels in Abhängigkeit vom festgestellten Abstand zwischen dem genannten Strahlenbündel (16) und der ausgewählten Zielspur.

2. Verfahren zum selektiven Wiedergewinnen von aufgezeichneter Information aus einer Vielzahl von optisch lesbaren Informationsspuren eines Informationsspeichermediums, wobei die Information Adressen zum Identifizieren der Spuren enthält, dieses Verfahren umfasst die Schritte: Drehen des Speichermediums, Auftreffenlassen eines Strahlenbündels auf das Speichermedium, damit ein in Abhängigkeit der in den Informationsspuren aufgezeichneten Information modulierter Strahl reflektiert wird, Rückgewinnen der Information aus dem modulierten Strahl, Auswählen einer Zielspur, aus welcher die Information anlässlich eines Suchvorganges zurückgewonnen werden soll, und Einleiten des genannten Suchvorganges, Bewegen des genannten Strahlenbündels über das Speichermedium zur ausgewählten Zielspur, Herabsetzen der Bewegungsgeschwindigkeit des genannten Strahlenbündels in Abhängigkeit des Abstandes zwischen dem genannten Strahlenbündel und der ausgewählten Zielspur, Stoppen der Bewegung des genannten. Strahlenbündels, wenn der genannte Abstand null ist, um damit den genannten Suchvorgang zu beenden, gekennzeichnet durch Entnehmen der Adressen aus der während des genannten Suchvorganges zurückgewonnenen Information und Verwenden der entnommenen Adressen zum Bestimmen des Abstandes zwischen dem genannten Strahlenbündel und der ausgewählten Zielspur zwecks Herabsetzung der Bewegungsgeschwindigkeit des genannten Strahlenbündels in Abhängigkeit des festgestellten Abstandes zwischen dem genannten Strahlenbündel und der ausgewählten Zielspur.

**Revendications**

1. Appareil de récupération sélective d'informations enregistrées à partir de plusieurs pistes d'informations lisibles optiquement formées dans un support de mémorisation d'informations, dans lequel les informations contiennent des adresses pour identifier les pistes, ledit appareil comportant: un dispositif (12) destiné à mettre en rotation le support de mémorisation (10); un dispositif (14) pour projeter un faisceau incident de rayonnement (16) sur le support de mémorisation (10) afin qu'il soit réfléchi par ce dernier sous forme d'un faisceau (20) modulé en fonction des informations mémorisées dans les pistes d'informations; un dispositif de récupération d'informations (22) destiné à récupérer des informations à partir du faisceau modulé (20), comprenant un dispositif de détection d'adresse (46) destiné à extraire des adresses des informations récupérées par ledit dispositif de récupération d'informations (22); un dispositif (50) de sélection d'une piste recherchée à partir de laquelle des informations doivent être récupérées dans un mode de recherche de fonctionnement et pour déclencher ledit mode de recherche de fonctionnement; un dispositif (24, 28) destiné à déplacer ledit faisceau incident (16) en travers du support de mémorisation (10) vers la piste recherchée sélectionnée; un dispositif de commande (52, 60) couplé avec ledit dispositif de déplacement (24, 28) pour diminuer la vitesse du mouvement dudit faisceau incident (16) en fonction de l'écart entre ledit faisceau incident (16) et la piste recherchée sélectionnée et pour interrompre le mouvement dudit faisceau incident quand ledit écart est nul, afin de terminer ledit mode de recherce de fonctionnement; caractérisé en ce que ledit dispositif de commande (52) utilise des adresses extraites par ledit dispositif de détection d'adresses (46) pendant ledit mode de recherche de fonctionnement pour déterminer l'écart entre ledit faisceau incident (16) et la piste recherchée sélectionnée dans le but de diminuer la vitesse du mouvement dudit faisceau incident en fonction de l'écart déterminé entre ledit faisceau incident (16) et la piste recherchée sélectionnée.

2. Procédé de récupération sélective d'informations mémorisées à partir de plusieurs pistes d'informations lisibles optiquement formées dans un support de mémorisation d'informations, dans lequel les informations contiennent des adresses pour identifier les pistes, ledit procédé consistant à faire tourner le support de mémorisation; à projeter un faisceau incident de rayonnement sur le support de mémorisation pour qu'il soit réfléchi par ce dernier sous forme d'un faisceau modulé en fonction des informations enregistrées dans les pistes d'informations; à récupérer des informations à partir du faisceau modulé; à sélectionner une piste recherchée à partir de laquelle des informations doivent être récupérées dans un mode de recherche de fonctionnement et à déclencher ledit mode de recherche de fonctionnement; à déplacer ledit faisceau incident en travers du support de mémorisation vers la piste recherchée sélectionnée; à diminuer la vitesse de mouvement dudit faisceau incident en fonction de l'écart entre ledit faisceau incident et la piste recherchée sélectionnée; à interrompre le mouvement dudit faisceau incident quand ledit écart est nul de manière à terminer ledit mode de recherche de fonctionnement; caractérisé en ce qu'il consiste également à extraire des adresses des informations récupérées pendant ledit mode de recherche de fonctionnement et à utiliser lesdites adresses extraites pour déterminer l'écart entre ledit faisceau incident et la piste recherchée sélectionnée dans le but de diminuer la vitesse du mouvement dudit faisceau incident en fonction de l'écart déterminé entre ledit faisceau incident et la piste recherchée sélectionnée.

Fig.1

Fig.2

NOMENCLATURE

$A_1$ = ADDRESS OF TRACK CURRENTLY BEING READ

$A_2$ = ADDRESS OF TARGET TRACK

FWD = CARRIAGE FORWARD SIGNAL ON LINE 62 TO CARRIAGE DRIVER

REV. = CARRIAGE REVERSE SIGNAL ON LINE 64 TO CARRIAGE DRIVER

STOP = CARRIAGE STOP SIGNAL ON LINE 79 TO STOP MOTION SUBSYSTEM

$D_n$ = THRESHOLDS FOR DISTANCE TO TARGET TRACK

$S_n$ = CARRIAGE DRIVE SIGNALS ON LINES 66-72 TO CARRIAGE DRIVER

2

*Fig. 4*

EP 0 181 436 B1

Fig.3

Fig.5

Fig.6

4